# EUROPEAN PATENT APPLICATION

(11) **EP 1 491 640 A2**
(43) Date of publication of application: **29.12.2004**
(21) Application number: 03744075.7
(22) Date of filing: 07.03.2003
(51) Int. Cl.: C14C 9/00, B32B 19/00, C11D 1/825

(54) **LAMINAR MATERIALS COMPRISING INCORPORATED PROPERTY-ALTERING MICROSPHERES AND THE METHOD OF PRODUCING SAME**

(30) Priority: 08.03.2002 WO PCT/MX02/00018; 08.10.2002 WO PCT/MX02/00097
(71) Applicant: Cueros Industrializados del Bajio, S.A. de C.V., 37490 Leon, Gto. (MX)
(72) Inventor: PEREZ-DIAZ, Juan Francisco, 37490 Leon, Gto (MX); GUERRERO-SALINAS, Juan Fortino, 37490 Leon, Gto (MX)
(74) Representative: von Hellfeld, Axel, Dr. Dipl.-Phys.
(86) International application number: PCT/MX2003/000026
(87) International publication number: WO 2003/076175

(57) **Abstract**

Laminates with incorporated beads are described, such beads containing property-modifying agents, such as heat absorption capacity and scent release capacity or resistance to microorganisms for long periods of time, useful in the automotive industry, furniture and other household goods, as well as in dressing cloths. The materials incorporate beads, regardless the color or finishing of the material, achieving a comfort greater than that obtained with previous laminates. Likewise, this invention describes a process to obtain laminates with beads to modify their incorporated properties.

## Description

### FIELD OF INVENTION

This invention related to the arts for the manufacturing of laminates, and more particularly, relates to laminates with beads incorporated to change their properties and to a process for their elaboration.

### BACKGROUND OF THE INVENTION

There is a great assortment of finishing in laminates allowing their use in the car-making, the costume and shoe industry and in the manufacturing of furniture, as well. Among the most important products made with laminates are the interior of cars, furniture, jackets, shoes, etc. Among the most demanded uses of laminates are those forming the different parts of car interiors.

Due to the above, the quality of a car interior, as well as the comfort of its passengers has currently become a parameter with great significance both for car manufacturers, and their end users. One of the items to deal with is the fact such laminates forming car interiors are generally exposed to the sun for long periods of time, and thus causing a considerable increase in the temperature of such minerals.

The temperature in a driver's cab can exceed 80°C in a warm summer's day due to the affecting solar radiation, whereas in a winter's day, temperatures can reach - 30°C. Under such conditions, passengers may have the bad experience of making their body skins contact with the warm or chill of a seat, drive wheel or the inside of the vehicle, which can reach even higher temperatures. This is of great importance in the case of cars since a passenger, when inside a vehicle, makes contact with any of said elements, between a 15 to a 20% with his/her body skin surface. Although air conditioning systems may render this effect less intense, the time required to level out the temperature of such things, is unsatisfying for the passenger to feel comfortably over long periods of time, even in those seats with ventilation or thermal controls, since, furthermore, the heat transference through the body, and due to the contact with the seat is initially very cold or very warm and has an important effect in the thermal sensation of an automobile's passenger.

Aimed at diminishing the temperature changes, different air conditioning systems have been used; their use however, is translated into significant input from an economical point of view and a power consumption standpoint, since the purposes of such air conditioning systems of cooling instead of heating the internal components of automobiles.

On the other hand, and with respect to the comfort sought for the interior of a car, the sense of smell has always been though as the lowest of the senses, and which one can go without easily since it changes our perception to a lesser extent than sight or tough. Without the sense of smell, however, we would be deprived of certain emotions.

This is, in all senses, because smell is characterized by the swiftness in triggering our brain, evidencing emotions and profound feelings, in some cases, more intense than those suggested by the sense of sight and touch. A nice fragrances evidences the comfort of an atmosphere.

Aimed at achieving a more comfortable atmosphere and permanence of a nice smell inside a car, users have been accustomed to scent the interiors with spray fragrances, or else, with small bags of scent or scent tablets; the use of this type of products, however, must be continuous since the scents dispersed by such products, use in specific periods of time, and lack of the length desired, and having an impact for the consumer from the economical point of view.

Due to the above, and given the restrictions on the energetic and economical consumption of air conditioning systems in automobiles, as well as the continual consumption of scents to keep a nice fragrance within cars in these recent years, the industry has emphasized its efforts towards the development of materials with special optical, thermodynamic and sweet-smelling properties, to be used inside and outside cars, such as seat coatings, dashboard, steering wheel, stem fast, accessories, etc., in such a way that surface temperatures behave more steadily when subjected to temperatures both cold and warm, as well as producing a nice fragrance to the user, and this way, the scent inside a car becomes more comfortable for the user when touching accessories and a nice surrounding fragrance.

More specifically, there is a great amount of auto parts, mainly inside vehicles, that incorporate laminates, whether natural or synthetic, such as leather and its byproducts such as the split, polymer synthetic materials, or else, fabrics of different nature.

This comfort as to fragrance and thermal requirements, however, have not been achieved since laminates currently used have a high heat absorption capacity, besides of having methods for beads incorporation that include little efficient scents.

As a result, there is the need to have laminates incorporating a dynamic temperature control and optical properties that avoid, to a great extent, the absorption of sun light, besides the capacity to emit a nice fragrance for the user of such laminates, and thus significantly having sway over the psychological and physiological comfort.

In the case of leather, there are some patents such as the US 6,179,879 B1, which outlines the use of beads with phase changing materials (PCM's, for its initials in English), by means of which it is intended to achieve the appropriate thermal control of leather. Leather, however, elaborated through such procedure features a still very high heating not yet achieving the comfort required for the case of heating the inside elements in automobiles.

Now then, as mentioned in US patent 6,194,484 B1, it has been thought as desirable to get pigments or particles with the capacity to reflect visible light within the range of 0.35 to 0.7 micrometers, up to an 80%, while the absorption within the range close to infrared from 0.7 to 2.5 micrometers increases by 10% in 0.7 micrometers and 50% in 2.5 micrometers. The emission within the range of 8 to 14 micrometers typically decreases by 90%. Notwithstanding the above, solar radiation has its maximum energy in around 1 micrometer, for which reason in this scale energy absorption would not be desirable for the surface of a thermal comfort substratum. As a result, there is also the need to find a balance in the properties of materials allowing for absorbing the energy needed to diminish changes in temperature. Furthermore, the application of this type or covering is limited to the construction industry, and thus, it is not possible to use them in flexible substratum with ease.

Documents referred to above, have failed to comply with the expectation for such components producing heat in laminates to have a chemical stability to the Xenon radiation and to heat, they are opaque to UV light, and to have at the same time, a great reflectivity to the infrared spectrum, and a high resistance to aging; regardless their performance in the material to which they incorporate must be such not to migrate, dissolve, or that may be suitably micronized, and have a high refraction ratio.

According to the above, to this date no laminate, whether natural or synthetic with a natural or colored finishing, has been elaborated, and which allows to satisfy the required features, and that the same time, allow for the elements outlined in the state of the art as thermal control aids, such as microcapsules of phase changing materials (paraffins, hydrous salts, and others) to perform, in the best way, their regulating function. Similarly, it has not been possible to suitably provide the thermal comfort characteristics in substratum with no surface finishing, including raw hides.

On the other hand, there is the Japanese Patent Number 20011234200, which protects a method to manufacture scented leather by emitting a fragrant over a relatively long period of time. Leather gets its characteristics after being covered with a spray which includes beads with a scent.

Likewise, Japanese Patent Number 04202483 outlines a coating composition allowing to keep aromatic properties; such composition comprises a microencapsulated perfume including a UV absorber, or else, a light stabilizer in amounts oscillating from 0.1 to 10% of weight with respect to the scent, at least one member selected from phenol groups, acetone, and aldehyde in a 5% less, where the main ingredient is a melanin resin.

Finally, Chinese Patent 1306094 protects the process to obtain scented leather consisting in immersing leather within a scented solution, having advantages such as: uniform distribution, and a lasting fragrance.

Documents referred to above, have failed to achieve the expectation in getting a laminate having an effective process allowing to keep the scent for long periods of time, and which is not affected by the external conditions such as: cold, warm, continual use, etc., with high resistance to aging, notwithstanding that its performance in the material to which is incorporated must be such that fails to migrate or dissolve.

According to the above, to date no laminate, whether natural or synthetic, has been obtained, with a natural or color finishing and which includes beads, same that allow attaining the required features, and that at the same time, allow the elements outlined in the state of the art, and helping in the thermal control and to keep the scent or perfume they contain for lengthy periods of time, such as the beads of phase changing materials (paraffins, hydrated salts, and others), to optimally perform their regulating function.

As can be observed from the previous art, it proved to be evident that incorporation of additives to beads has been a problem not overcoming satisfactorily the state of the art, since precisely many of the drawbacks of the arts for incorporating additives or substrate laminates, results from a poor incorporation of the bead containing them, whether inside the substratum matrix or in the finishing thereof.

Due to the above, efforts have been made to cut out disadvantages of laminates in the state of the art through development of laminates with incorporated beads modifying such properties as can be the capacity to absorb heat for the thermal control, as well as the capacity to emit a nice fragrance over lengthy periods of time, for use in the car-making industry, home finishing, and articles of clothing; in addition to a process to obtain such laminates.

### OBJECTIVES OF THE INVENTION

Realizing the imperfections in the above art, it is an aim of this invention to provide laminates with low heat absorption capacity with suitable optical and thermodynamic properties for thermal control and that may as a result, be used in the car-making industry, furniture, other households, and in articles of clothing, as well.

It is also an aim of this invention to obtain laminates with beads to modify their incorporated properties, regardless of the color.

It is another aim of this invention, to provide laminates with beads to change their incorporated properties not featuring any deterioration due to aging chemical reactions.

It is yet another purpose of this invention, to provide laminates with beads to modify their incorporated properties containing inert, organic or inorganic pigment loads, and other materials, in aqueous stage within the leather matrix and/or the particles forming the finishing thereof.

An additional objective of this invention is to providing a process through which a profound penetration within the laminate is attained.

It is yet another objective of this invention to provide a process to change the properties in laminates by incorporating beads comprising agents modifying properties such as phase changing materials, scent and biocides.

Another objective of this invention is to provide a process to change the properties of laminates by means of which it is produced such an effect that beads support the mechanical action caused within a cylinder in motion -present in some of the stages of leather processing- therefore, avoiding their separation from the rest of the mixture, that resists the high concentration of electrolytes, load and pH of certain tanning or auxiliary products, present in some of the leather tanning processes, and which help to keep beads within a uniform mixture during the bathe of the process for the use of high exhaustion cylinders.

It is yet another objective of this invention, to provide a process to change the properties of laminates that attains a homogenous distribution of beads with the complex laminate matrix such as animal skin or leather.

An additional objective of this invention is to provide a process to change the properties of laminates that accomplished the incorporation of beads within the complex fiber matrix such as animal skin or leather to a deficient hair process, presenting keratin and residual hair, and also a low fibril opening.

### SUMMARY OF THE DRAWINGS

The innovative features considered as distinctive of this invention shall be set out to detail within the attached claims. However, their structure and operation, together with other objects and advantages thereof, will be better understood in the next detailed description of a specific embodiment, when dealt with the attached drawings, where:
Figure 1 is a cross-sectional view of raw hides, where a fiber matrix and the inappropriate penetration of beads are depicted.
Figures 2, is a cross-sectional view of raw hides, where the fiber matrix and a suitable penetration of beads are depicted.
Figure 3 is a graph where releasing encapsulated and non-encapsulated scent intensities are compared with respect to time, for leather in example 2 of this invention.

### DETAILED DESCRIPTION OF THE INVENTION

It has been discovered that through the use of beads with agents changing the properties incorporated during the process and wet and dry finishing of laminates, it is possible to get laminates with different colors and modify its properties such as thermal regulation ones, properties to emit nice perfume or scents, and resistance to microorganisms, among many others, though incorporating beads with agents changing the suitable properties for the desired purpose. These features make the laminate suitable for its application in the car-making industry, furniture, and other households, or in garments among other applications.

According to the above, the laminates with beads of this invention consist of at least one fiber matrix; at least from 0.5% to 16% of weight, on the basis of the matrix weight of fibers, of beads with agents changing the properties whether incorporated within such fiber matrix, or else, applied on at least of the laminate surfaces.

It is worth mentioning that in a preferred embodiment, beads included in the laminates of this invention, contain property changing agents, which are selected between agents such as; temperature regulating agents, scents, perfumes, biocides, and mixtures and combinations thereof.

In a preferred embodiment of this invention, laminates are selected among laminates made up by natural or synthetic fibers, more preferably selected between fabrics from natural or synthetic fibers, leather, leather byproducts, polymer laminates and mixtures or combinations thereof.

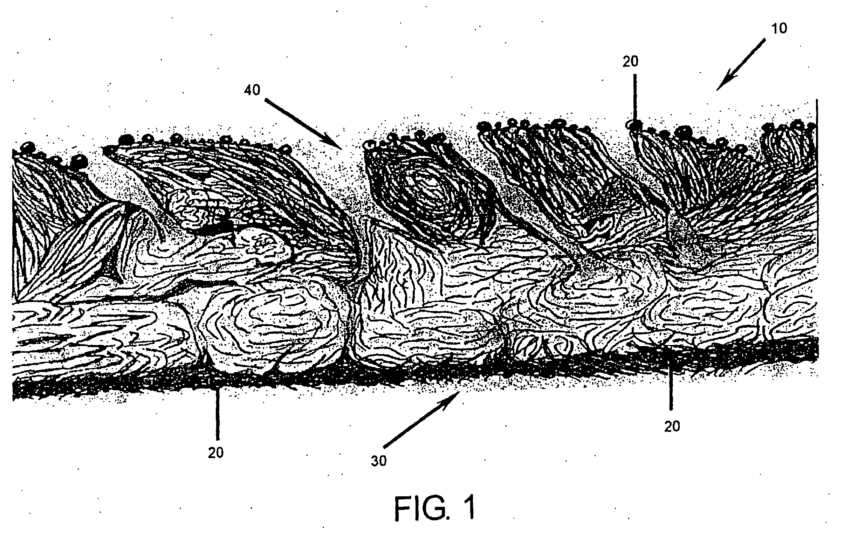

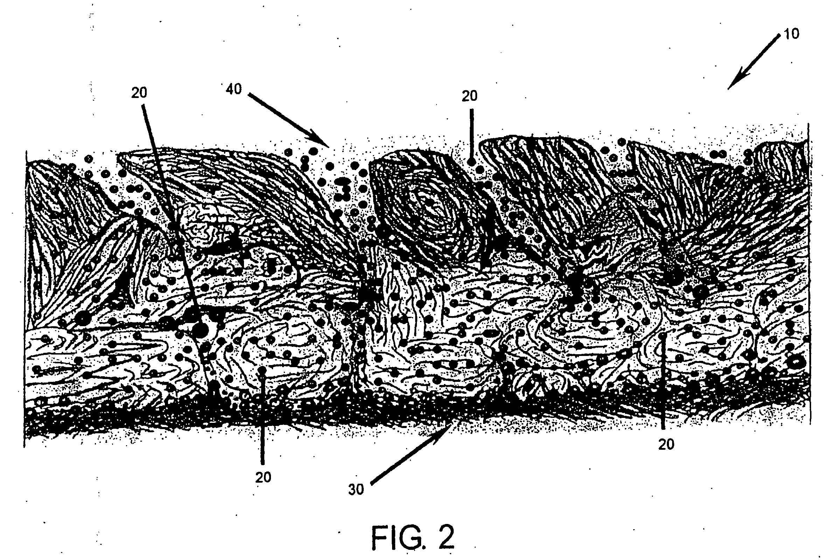

It is worth highlighting that complex laminate substrata such as leather o derivatives thereof, beads failed to be incorporated in the state of the art in a sufficiently flat manner in order to substantially modify the properties for a user due to the uneven nature of leather, and thus featuring the incorporation such as depicted in figure 1, where we can observe a cross-sectional view of leather 10 in which beads 20 remain on the surface of the flesh side 30, or the lower side 40 of the leather, instead of suitably penetrating as shown in figure 2.

Thanks to the effective incorporation of beads into laminates of this invention, in the embodiment where beads contain temperature regulating agents, a decrease in the heating temperature of such materials is achieved between 5 and 40° C with respect to the normal heating thereof, without the temperature regulating agent or being this agent incorporated by techniques of the previous art, depending on the amount of beads and the properties of the temperature regulating agents. In a specific embodiment of this invention, temperature regulating agents have a melting point between -10°C and 70°C, and are selected, more preferably, between linear paraffins with 10 to 30 carbon atoms. More specifically, paraffins are selected between n-tridecane, n-hexadecane, n-heptadecane, n-octadecane, n-nonadecane, n-eicosane, n-heneicosane, n-docosane, n-tricosane, n-tetracosane, n-pentacosane, n-hexacosane, n-heptacosane, and n-octacosane.

As regards the embodiment where the property changing agent is to be released through the effective beads incorporation of this invention, property changing agents attain a greater permanence of the effect in the property changed due to a lasting release effect of such agents, as in the case of perfumes, scents, and biocides.

With respect to the process to get laminates of this invention, the process consists of a mix contact stage consisting in putting a laminate formed by a fiber matrix in tough with a bead suspension with a surfactant additive, a drying stage to dry the laminate so that beads are evenly incorporated into the laminate fiber matrix, and a finishing stage where a coating is applied on the laminate, preferably the external. In a preferred embodiment of this invention, the coating stage is carried out through the application of a coating including also the beads suspension modifying the properties containing a surfactant additive on, at least, one of the laminate surfaces, so the laminate can be easily dried in a way that beads remain included too in at least one of its surfaces.

In a specific embodiment where laminate is leather o byproducts thereof, the process is carried out from any type of leather or its byproducts, that is to say, from any leather-derived material or animal skin, already subjected to at least one tanning procedure. The leather is, in addition, put in touch with a greasing agents and other coloring or tanning agents known in the state of the art, preferably at the same time to that of the bead suspension. In an additional embodiment, however, the greasing agent may be put in touch with the leather or its byproducts in an additional stage, whether previous or after incorporating the beads suspension.

As to the contact mix stage, in a specific embodiment of this invention, this one is performed slowly within the tank including excitement means in presence of water at an approximate temperature of 5°C up to about 80°C.

In a preferred embodiment of this invention, the surfactant additive comprises from 10 to 35% of fatty alcohols; from 30% to 80% of fatty acids; from 30% to 80% of sorbitan esters; and from 1 to 10% of fatty amines, and ethoxylated derivates of fatty alcohols, fatty acids, and sorbitan esters.

More preferably, fatty alcohols are selected between isodecyl alcohol, lauryl, alcohol, tridecyl alcohol, cetyl alcohol, cety stearyl alcohol, stearyl alcohol, oleyl alcohol, and mixtures or combinations thereof.

Likewise, fatty acids are preferably selected between lauryl acid, palmic acid, polyethylene glycol monoestearate, staeric acid, and oleic acid.

As mentioned above, figure 2 depicts a cross-sectional view of raw hides which suitably incorporates beads 20, changing the properties according to this invention, both in fiber matrix and the finishing shown in the grain split side 40.

It is further worth mentioning that the conditions, at which the incorporation of beads is carried out according to this invention, may vary depending on the laminate's nature. It is possible to use any of the arts outlined in the state of the art for the incorporation or soaking of laminate substances, as well as the arts described in the application of films on them, such as may be, as an enumeration, but not as a limitation, the direct tough with cylinder agents or other touch devices, or else, the coating application through cylinder, rolling, spraying, etc. In addition, it is worth mentioning that this invention allows obtaining multiple color laminates.

Laminates in the invention and the process for their elaboration shall be more clearly illustrated through the following example, which are depicted with illustrative purposes, for which reason, they are not a limitation thereof.

### EXAMPLES

Aimed at illustrating the possibility to put into practice the invention to get laminates with incorporated beads, several types of leather were subjected to the process of this invention, since they are the materials that are more difficult for beads incorporation. Due to the nature of beads, it is impossible to suitably quantify the incorporation of beads, but it is possible to only measure the effect of their incorporation as compared to what is obtained with arts know in the previous art. According to this examples were carried out with beads containing temperature regulating materials and with beads containing scents.

The examples presented herein were carried out by putting in touch leather with a beads suspension with a surfactant additive. Beads had several property changing agents, with a Re-tanning, Dyeing, and Greasing cylinder for leather under slow excitement, and the tank being at 50°C over 2 hours. The laminate obtained through this way, was subjected to a stretching and furnace drying process, and finally, as the example required, to a finishing process where a film or coating through spraying on the leather surface known as grain split. Such coating includes also a bead suspension with surfactant additive.

### EXAMPLE 1

The process outlined was carried out for the examples by using scented beads from the unfinished raw hides. A sample of the material thus obtained was placed in 1 liter Leifheit, model "Einkochspa a" vials, with neutral smell, sealed and covered. The vial was subjected to the heating of a furnace with air circulation through DIN 50 011-12, precision class 2 at 80°C over 2 hours.

Intensity of scent was carried out through a perception method through valuators, where the evaluation scale was carried out according to the following:

**TABLE I**

| Intensity of scent emitted by leather | Degree of Intensity |
|---|---|
| Unperceived | 1 |
| Perceived | 2 |
| Clear perception with no feeling of discomfort | 3 |
| Perception with feeling of discomfort | 4 |
| Perception with a strong feeling of discomfort | 5 |
| Unbearable | 6 |

The intensity of scent is indicated with the degree of intensity, since such degrees have been provided with an arithmetic value, variants f the test are rounded to the closest value to average.

Results of the test are shown in next table. The material obtained in the example was compared to the samples without beads, but steeped with essential oil based on the RTE process; and samples 4, 5, and 6 in table II were treated as beads containing essential oil in their cores. All samples were processed at same scent concentration (3%).

**TABLE II**

| Identification | Evaluator 1 | Evaluator 1 | Evaluator 1 | Average Result |
|---|---|---|---|---|
| 1 | 3.5 | 3 | 3 | 3.16 |
| 2 | 3.5 | 3 | 3.5 | 3.33 |
| 3 | 3 | 2.5 | 2.5 | 2.66 |
| 4 | 3 | 3 | 3.5 | 3.16 |
| 5 | 3.5 | 3 | 3 | 2.83 |
| 6 | 3.5 | 2.5 | 2.5 | 2.83 |

As can be observed in table II, average results according to the test performed by evaluators for samples 1 to 6 in this example, are satisfactory and correspond, according to the scale shown in table II, to scents are clearly perceived with no feeling of discomfort.

Therefore, a suitable effect is attained in incorporating the scent with respect to the techniques in the previous art, and thus it becomes evident; that incorporation to leather is accomplished.

### EXAMPLE 2

Aimed at checking up the suitable incorporation of beads into the finishing for each 3 grams of raw hides, the finishing was applied with 1.4 grams of a formula including 9% scented beads (encapsulated scent), and the surfactant system of this invention.

On the other hand, techniques of the previous art were put in touch with leather with a water solution of 72.5% and 27.5% of scent. Such incorporation was carried out in the tank including excitement methods.

Both leathers were places inside a car, specifically on the dashboard, horizontally, with the flesh side downwards for 7 days. Maximum temperature attained during the test in this example was 90°C in a day.
Evaluation of scent intensity after the test is depicted in Table III, according to the same method to measure perception by evaluators.

**TABLE III**

| **Scent in the leather sample** | **Scent** | **Intensity of scent** | **Changes in physical characteristics of leather** |
|---|---|---|---|
| E1-non-encapsulated scent | Inexistent | 1 | None |
| E2-microencapsulated scent | Present | 3 | None |

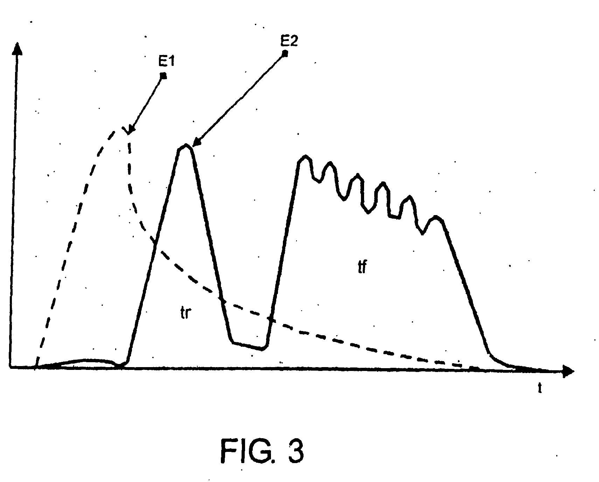

Tests were repeated over after three months and results appeared thereafter. The behavior of the intensity of the scent emitted by laminate leather obtained in the example outlined above, is depicted graphically in figure 3, where it can be observed that the material obtained through this invention features the release of scent over time, measured by intensity (i), considerably greater than leather prepared with non-encapsulated scents, and therefore, the scent is significantly extended over time.

### EXAMPLE 3

The incorporation of beads to leather was carried out according to the procedure outlined for the examples, but using beads containing temperature regulating materials known as phase transference materials, the aim of which is lessening the heat they experience. Likewise, the performance of beads incorporated through the process in this invention, as compared to the incorporation process in the previous art without the surfactant additive, aimed at making the comparison of the behavior without the finishing.

The obtained samples were subjected to heating with a 250 watts lamp at a perpendicular distance of 25 cm presenting the behavior shown in the following table:

**TABLE IV**

| **Time (min)** | **Beads incorporated with surfactant** | **Beads incorporated according to the state of the art** |
|---|---|---|
| | Temperature (°C) | Temperature (°C) |
| 2 | 75 | 81 |
| 4 | 80 | 90 |
| 6 | 90 | 95 |

Table IV shows that the behavior of the beads incorporated in accordance with the state of the art is less effective to avoid the heating than that of this invention, and even, coincides with the behavior of leathers without incorporated beads.

In accordance with the above described, it can been seen that laminates with beads modifying the incorporated properties, have been designed to achieve an adequate comfort therein, and will be evident for any expert on the subject that the embodiments of the laminates above described and illustrated in the attached drawings and the process to obtain them, are only illustrative but not a limitation of this invention, since there is a Possible number of important changes in its details without straying away from the scope of the invention.

Even when a specific embodiment of the invention has been illustrated and described, special emphasis must be made in that there are possible various modifications such as can be the use of different property-modifying agent inside the beads together with the agents regulating temperature, perfumes, scents and biocides. Therefore, this invention must not be considered as restricted excepting for what is demanded by the former art and by the content and scope of the attached claims.

## Claims

1. A laminate with incorporated beads of the type that includes a fiber matrix and a coating applied on, at least, one of the surfaces of the laminate, **characterized in that** comprises, at least, from 0.5% approximately, to 16% approximately, in weight, over the fiber matrix weight base, of beads containing agents to modify properties incorporated evenly either inside such fiber matrix and/or inside the coating.

2. A laminate in accordance with claim 1, further **characterized in that** the agents to modify properties are selected among regulators of temperature, scents, perfumes and biocides.

3. A laminate in accordance with claim 1, further **characterized in that** materials to modify properties which effect is due to the release of these maintain an extended release effect inside the laminate.

4. A laminate in accordance with claim 2, further **characterized in that** the temperature regulators are selected among those having a melting point comprised between -10°C and 70°C.

5. A laminate in accordance with claim 4, further **characterized in that** the temperature regulators are selected among linear paraffins with 10 to 30 carbon atoms.

6. A laminate in accordance with claim 5, further **characterized in that** temperature regulators are selected among n-tridecane, n-hexadecane, n-heptadecane, n-octadecane, n-nonadecane, n-eicosane, n-heneicosane, n-docosane, n-tricosane, n-tetracosane, n-pentacosane, n-hexacosane, n-heptacosane and n-octacosane.

7. A laminate in accordance with claim 1, further **characterized in that** such laminate is selected between laminates constituted by natural or synthetic fibers.

8. A laminate in accordance with claim 1, further **characterized in that** the laminate is selected among natural or synthetic fiber fabric, leather, leather derivatives, polymeric laminates and mixtures or combinations of these.

9. A process for the preparation of a laminate of the type that includes a contact mixing stage followed by a drying stage and a finishing stage, **characterized in that** the contact mixing and finishing stages are performed with a bead suspension that contains a surfactant additive in order that the beads be evenly incorporated in the fiber matrix of the laminate and/or in a coating formed in the finishing stage.

10. A process for the preparation of a laminate in accordance with claim 9, further **characterized in that** the contact mixing stage is based on putting in contact a laminate constituted by a fiber matrix with the bead suspension containing the surfactant additive.

11. A process for the preparation of a laminate in accordance with claim 9, further **characterized in that** the finishing stage is performed with the application of a coating that includes a bead suspension containing a surfactant additive over, at least, one of the laminate surfaces.

12. A process for the preparation of a laminate in accordance with claim 9, further **characterized in that** such laminate is selected between laminates constituted by natural or synthetic fibers.

13. A process for the preparation of a laminate in accordance with claim 12, further **characterized in that** the laminate is selected among natural or synthetic fiber fabric, leather, leather derivatives, polymeric laminates and mixtures or combinations thereof.

14. A process for the preparation of a laminate in accordance with claim 13, further **characterized in that** the process is performed from any animal skin or hide derivative, which was already subjected to, at least, one tanning process.

15. A process for the preparation of a laminate in accordance with claim 14, further **characterized in that** the contact mixing stage is performed simultaneously with the addition of a greasing agent or other coloring or tanning additives.

16. A process for the preparation of a laminate in accordance with claim 9, further **characterized in that** the contact mixing stage is performed slowly in a tank that includes excitement means in presence of water at a temperature of 5°C up to 80°C.

17. A process for the preparation of a laminate in accordance with claim 9, further **characterized in that** the surfactant additive comprises from 10% to 35% of fatty alcohols; from 30% to 80% of fatty acids; from 30% to 80% of sorbitan esters; and from 1% to 10% of fatty amines and ethoxylated derivatives of fatty alcohols, fatty acids and sorbitan esters.

18. A process for the preparation of a laminate in accordance with claim 10, further; **characterized in that** the fatty alcohols are selected among isodecyl alcohol, lauryl alcohol, tridecyl alcohol, cetyl alcohol, cetyl stearyl alcohol, oleyl alcohol and mixtures or combinations of these.

19. A process for the preparation of a laminate in accordance with claim 11, further **characterized in that** the fatty acids are selected preferably among lauric acid, palmitic acid, polyethylene glycol monostearate, stearic acid and oleic acid

20. A bead suspension to modify properties of materials **characterized in that** includes beads with material property-modifying agents and a surfactant agent.

21. A bead suspension in accordance with claim 20, further **characterized in that** the surfactant agent includes from 10% to 35% of fatty alcohols; from 30% to 80% of fatty acids; from 30% to 80% of sorbitan esters; and from 1% to 10% of fatty amines and ethoxylated derivatives of fatty alcohols, fatty acids and sorbitan esters.

22. A bead suspension in accordance with claim 21, further **characterized in that** the fatty alcohols are selected among isodecyl alcohol, lauryl alcohol, tridecyl alcohol, cetyl alcohol, cetyl stearyl alcohol, oleyl alcohol and mixtures or combinations of these.

23. A bead suspension in accordance with claim 21, further **characterized in that** the fatty acids are preferably selected among lauric acid, palmitic acid, polyethylene glycol monostearate, stearic acid and oleic acid.

24. A bead suspension in accordance with claim 20, further **characterized in that** the beads contain materials selected among regulating agents of temperature, scents, perfumes and biocides.

25. A bed suspension in accordance with claim 24, further **characterized in that** the temperature regulators are selected among those having a melting point between -10°C and 70°C.

26. A bead suspension in accordance with claim 25, further **characterized in that** the temperature regulators are selected among linear paraffins with 10 to 30 carbon atoms.

27. A bead suspension in accordance with claim 26, further **characterized in that** the temperature regulators are selected among n-tridecane, n-hexadecane, n-heptadecane, n-octadecane, n-nonadecane, n-eicosane, n-heneicosane, n-docosarie, n-tricosane, n-tetracosane, n-pentacosane, n-hexacosane, n-heptacosane and n-octacosane.

28. A surfactant agent for the bead suspension **characterized in that** includes from 10% to 35% of fatty alcohols; from 30% to 80% of fatty acids; from 30% to 80% of sorbitan esters; and from 1% to 10% of fatty amines and ethoxylated derivatives of fatty alcohols, fatty acids and sorbitan esters.

29. A surfactant agent in accordance with claim 28, further **characterized in that** the fatty alcohols are selected among isodecyl alcohol, lauryl alcohol, tridecyl alcohol, cetyl alcohol, cetyl stearyl alcohol, stearyl alcohol, oleyl alcohol and mixtures or combinations of these.

30. a surfactant agent in accordance with claim 28 further **characterized in that** the fatty acids are selected among lauric acid, palmitic acid, polyethylene glycol monostearate, stearic acid and oleic acid.
